# EUROPÄISCHE PATENTSCHRIFT

(11) **EP 0 293 949 B1**
(45) Veröffentlichungstag und Bekanntmachung des Hinweises auf die Patenterteilung: **23.02.1994**
(21) Anmeldenummer: 88200646.3
(22) Anmeldetag: 06.04.1988
(51) Int. Cl.: G02B 6/38

(54) **Steckverbindung der Enden zweier Lichtwellenleiter**
Plug connection of the ends of two light guides
Connexion des extrémités de deux fibres optiques

(30) Priorität: 09.04.1987 DE 3711965
(43) Veröffentlichungstag der Anmeldung: 07.12.1988
(73) Patentinhaber: Philips Patentverwaltung GmbH, 22335 Hamburg (DE); Philips Electronics N.V., 5621 BA Eindhoven (NL)
(72) Erfinder: Schürmann, Erich, Dr., D-4415 Sendenhorst (DE); Grzesik, Ulrich, Dr., D-5060 Bergisch Gladbach (DE)
(74) Vertreter: Koch, Ingo

(56) Entgegenhaltungen:
- EP-A- 0 001 702
- EP-A- 0 029 512
- US-A- 4 186 997

## Beschreibung

Die Erfindung bezieht sich auf eine Steckverbindung der Enden zweier Lichtwellenleiter (LWL), welche an Halterungen festgelegt und in die Führungsrinne eines Richtelements eindrückbar und mittels eines Längs-Federelements mit ihren Stirnflächen gegeneinander drückbar sind.

Bei einer durch die EP-PS 29 512 bekannten Anordnung dieser Art sind die von ihrer Schutzumhüllung (Primär-Coating) befreiten Endbereiche der LWL jeweils in Führungsrinnen einer Halterung lose eingelegt und dort im hinteren Bereich festgeklemmt. Im vorderen Bereich liegen sie auf einem gummielastischen Einsatzelement auf, welches den Andruck in die Führungsrinne eines Richtelements bewirken soll. Mittels einer Wendelfeder sind die beiden Halterungen gegeneinander gedrückt, wodurch gleichzeitig die mit den Stirnflächen der Halterung bündig abschließenden Stirnflächen beider LWL aneinander gelegt werden. Beim Koppelvorgang müssen die Enden der LWL gegen die vom Druck der Einsatzelemente verursachte Reibungskraft durch die Führungsrinne des Richtelements geführt werden. Dabei können insbesondere die Stirnflächen der LWL beschädigt werden. Darüberhinaus bereitet die Einfädelung der LWL in die Führungsrinne erhebliche Schwierigkeiten, insbesondere deshalb, weil die LWL vor der Einführung in die Führungsrinne des Richtelements durch die gummielastischen Einsatzelemente aus ihrer Halterung hochgedrückt sind.

Der Erfindung liegt die Aufgabe zugrunde, die Anordnung der eingangs genannten Art derart zu gestalten, daß eine Beschädigung der LWL beim Koppelvorgang weitgehend ausgeschlossen ist, wobei eine gleichbleibend gute und dämpfungsarme optische Verbindung gewährleistet sein soll.

Die Lösung gelingt durch die charakterisierenden Merkmale des Anspruchs 1. Die Führungseinrichtungen sind dabei derart gestaltet, daß mindestens eines der Enden der LWL zunächst mit Freiabstand über die Führungsrinne soweit zum anderen LWL schiebbar ist, daß zwischen den Stirnflächen der LWL ein geringer axialer Abstand verbleibt, daß danach der LWL unter Bewahrung eines geringen Axialabstandes in die Führungsrinne drückbar ist, und daß sich danach durch Weiterschiebung des LWL in der Führungsrinne eine federnde Anlage der Stirnflächen der zu verbindenden LWL ergibt. Dabei wird der LWL lateral in die Führungsrinne eingelegt, und zwar in einer Position, bei welcher die Stirnflächen der zu verbindenden LWL noch geringfügig beabstandet sind, so daß sie nicht durch Aneinandergleiten beschädigt werden können. Erst danach erfolgt die endgültige Kopplung durch Weiterschieben des LWL in der Führungsrinne über eine sehr kleine Länge von weniger als 1 mm. Erst kurz vor dem Erreichen der Endstellung wird die endgültige Führung durch den in die Führungsrinne des Richtelements gedrückten LWL übernommen. Auf diese Weise sind selbst Monomode-LWL mit einwandfreier koaxialer Ausrichtung verbindbar.

Es hat sich weiterhin als vorteilhaft erwiesen, die Führungseinrichtungen derart auszubilden, daß zunächst der hintere Teil des LWL und danach mit einer Kippbewegung sein vorderer Teil in die Führungsrinne bewegt werden. Dadurch wird ein Einkanten der Stirnfläche des LWL in den Werkstoff des Richtelements vermieden, so daß es sogar möglich ist, das Richtelement aus Kunststoff herzustellen.

Eine vorteilhafte Ausführungsform der Erfindung ist dadurch gekennzeichnet, daß die Führungseinrichtungen der gegeneinander zu führenden Teile aus korrespondierenden Gleitflächen mit in Verschiebungsrichtung aufeinanderfolgenden Längsabschnitten unterschiedlicher Höhe bestehen, welche einander nach dem Erreichen des geringen Axialabstandes der Stirnflächen der zu verbindenden LWL mit Spiel gegenüberliegen. Da die korrespondierenden Gleitflächen im Verbindungszustand, also bei aneinanderliegenden Stirnflächen der zu koppelnden LWL nicht mehr aufeinanderliegen, ist sichergestellt, daß die Ausrichtung der LWL ausschließlich durch ihre Anlage in der Führungsrinne des Richtelements vorgegeben ist.

Ein sanftes Einführen des LWL in die Führungsrinne des Richtelements wird dadurch erreicht, daß die aufeinanderfolgenden Längsabschnitte der Führungseinrichtungen mit Übergangsschrägen von einer Gleitfläche in die folgende versehen sind.

Gemäß einer bevorzugten Ausführungsform ist vorgesehen, daß die korrespondierenden Gleitflächen einerseits am mit der Führungsrinne versehenen Richtelement und andererseits an der Halterung des LWL angeordnet sind. Dabei sind die Gleitflächen unmittelbar an den Bauteilen angeordnet, die zueinander ausgerichtet werden sollen, so daß Toleranzen der Abmessungen weiterer Bauteile eines Steckergehäuses keinen Einfluß haben können.

Die Federelemente, welche einen Axialandruck der zu verbindenden LWL-Stirnflächen und einen lateralen Andruck der LWL in die Führungsrinne des Richtelements bewirken sollen, sind vorteilhaft zwischen der Halterung und einem Steckergehäuse vorzusehen. Die Ausbildung der Federelemente ist auf verschiedene Art möglich. Beispielsweise können Wendelfedern oder gummielastische Zwischenstücke wie im Falle der EP-PS 29 512 verwendet werden.

Bei einer vorteilhaften Ausführungsform der Erfindung ist vorgesehen, daß die Federelemente längliche Anformungen der Halterung sind. Die integrierten Federelemente können sowohl axiale als auch dazu senkrechte laterale Federkräfte erzeugen. Eine mit Federelementen integrierte Halterung kann aus einem geeigneten Kunststoff als Spritzgußteil hergestellt sein.

Es ist weiterhin möglich, eine solche Halterung über die Federelemente mit einem Steckergehäuse einstückig zu verbinden. Bevorzugt wird jedoch eine Lösung, bei welcher die Halterung als getrenntes Bauteil in ein Steckergehäuse eingerastet ist. Dann kann die Verklebung des LWL an der Halterung unbehindert vom Steckergehäuse vorgenommen werden. Darüberhinaus können unterschiedliche Materialien verwendet werden, vorzugsweise ein hochwertigeres und teureres Material für die Halterung.

Bei einer bevorzugten Ausführungsform ist vorgesehen, daß ein mit seinem Endbereich in einem Steckergehäuse vorzugsweise verrasteter Federstab mit seinem mittleren Bereich gegen Widerlageransätze der Halterung für den LWL axial in Richtung auf die Stirnflächen des LWL und senkrecht dazu in Richtung auf die Führungsrinne des Richtelements gedrückt ist.

Das Richtelement kann in das Steckergehäuse eingerastet sein, wobei eine Rastverbindung mit dem Gegenstecker vermieden werden sollte. Dann verbleibt nähmlich das Richtelement beim Lösen des Kupplungsteils immer in dem Steckergehäuse, mit welchem es verrastet ist.

Die Steckergehäuse zu koppelnder LWL können direkt aneinander gekuppelt werden, wenn z.B. eines der Steckergehäuse einen das andere Steckergehäuse übergreifenden Kupplungsansatz hat.

Vorzugsweise ist jedoch vorgesehen, daß in ein Verbindungsgehäuse von beiden Seiten her gleichartige gemäß der Erfindung gestaltete Steckergehäuse einschiebbar sind und durch Rastung fixierbar sind.

Es ist vorteilhaft, daß die Rastelemente für die Einrastung der Steckergehäuse in das Verbindungsgehäuse eine Schrägfläche aufweisen, durch welche ein Axialdruck in das Verbindungsgehäuse aufrechterhalten wird.

Die Stirnflächen der LWL kommen früher als die Stirnflächen der Steckergehäuse zur Anlage. Dadurch wird ein definierter Andruck der zurückfedernden LWL-Stirnflächen bewirkt.

Dadurch, daß die Halterung und das Richtelement korrespondierende Einfädelungsführungen aufweisen, welche insbesondere auch quer zur Andruckrichtung führen, wird erreicht, daß der LWL zuverlässig in die Führungsrinne des Richtelements gleitet, ohne daß er vorher mit anderen Teilen der Steckverbindung in Berührung kommen kann.

In definierter Lage wird der LWL dadurch an der Halterung befestigt, daß er in eine V-förmige Rinne der Halterung geklebt ist.

Eine gut und sicher haftende Verklebung erreicht man dadurch, daß der LWL über seine aus Kunststoff bestehende Umhüllungsschicht (Primär-Coating) in die Rinne der Halterung geklebt ist. Vor dem Verkleben wird also der LWL nicht von seiner Schutzumhüllung befreit. Da jedoch der unter der Schutzumhüllung liegende Quarzglasmantel weniger Mittenversatz gegenüber der optischen Achse des LWL aufweist, ist es vorteilhaft, daß die Berührungsflächen des LWL mit der Führungsrinne des Richtelements von der Umhüllungsschicht freigelegte Umfangsbereiche der Mantelschicht des LWL sind. Die Ausrichtung der zu kuppelnden LWL wird dann durch die Führungsrinne des Richtelements über die Mantelschicht der LWL vorgegeben. Wegen der dabei präzise erfolgenden gegenseitigen koaxialen Ausrichtung der Kerne der LWL ist die erfindungsgemäße Lösung besonders vorteilhaft auch zur Verbindung von Monomode-LWL geeignet.

Zur Verhinderung von Beschädigungen der Stirnflächen der LWL ist es vorteilhaft, daß an der Halterung mindestens ein über die Stirnfläche des LWL hervorragender axialer Vorsprung angeordnet ist, welcher in eine Ausnehmung einer anzukoppelnden korrespondierenden Halterung paßt.

Eine alternative Ausführungsform einer Halterung, welche eine besonders gute Ausrichtung des LWL ermöglicht, ist dadurch gekennzeichnet, daß im vorderen Bereich der Halterung ein weichelastisches Einsatzelement eingefügt ist, welches mit einer Rinne den vom Coating befreiten Endbereich des LWL aufnimmt und weich in die Führungsrinne des Richtelements drückt. Dabei ist vorteilhaft vorgesehen, daß in der Halterung mit axialem Freiabstand zum weichelastischen Einsatzelement ein flacher Rinnenabschnitt zur Führung des LWL angeordnet ist.

Eine besonders feste Verklebung der LWL in einer solchen Halterung wird dadurch ermöglicht, daß der hintere Bereich der Halterung eine den eingelegten LWL überragende Erweiterung aufweist, in welche ein den LWL satt überdeckender Kleber eingefüllt ist.

Die Erfindung und vorteilhafte Ausgestaltungen werden anhand der Beschreibung eines in der Zeichnung dargestellten besonders vorteilhaften Ausführungsbeispiels erläutert.
Fig. 1 zeigt schematisch beim Kopplungsvorgang aufeinanderfolgende Positionen der zu verbindenden LWL.
Fig. 2 zeigt perspektivisch die einzelnen zusammenzufügenden Bauteile eines Steckers.
Fig. 3 zeigt perspektivisch die Bauteile nach Fig. 1 im zusammengefügten Zustand.
Fig. 4 zeigt in stark vergrößerter Darstellung die Verklebung eines LWL an seiner Halterung.
Fig. 5 zeigt perspektivisch in ein Mehrfachverbindungsgehäuse eingeschobene Stecker.
Fig. 6 zeigt eine abgewandelte Halterung vor der Einfügung eines Einsatzelementes.
Fig. 7 zeigt die Halterung nach Fig. 6 mit eingefügtem Einsatzelement.
Fig. 8 zeigt teilweise ein Steckergehäuse zur Aufnahme der Halterung nach Fig. 6.
Fig. 9 zeigt ein der Halterung nach Fig. 6 angepaßtes Richtelement.
Fig.10 zeigt eine andere Ansicht der Halterung nach Fig. 6 mit eingelegtem Federstab.
Fig.11 zeigt eine andere Ansicht des Steckergehäuses nach Fig. 8.

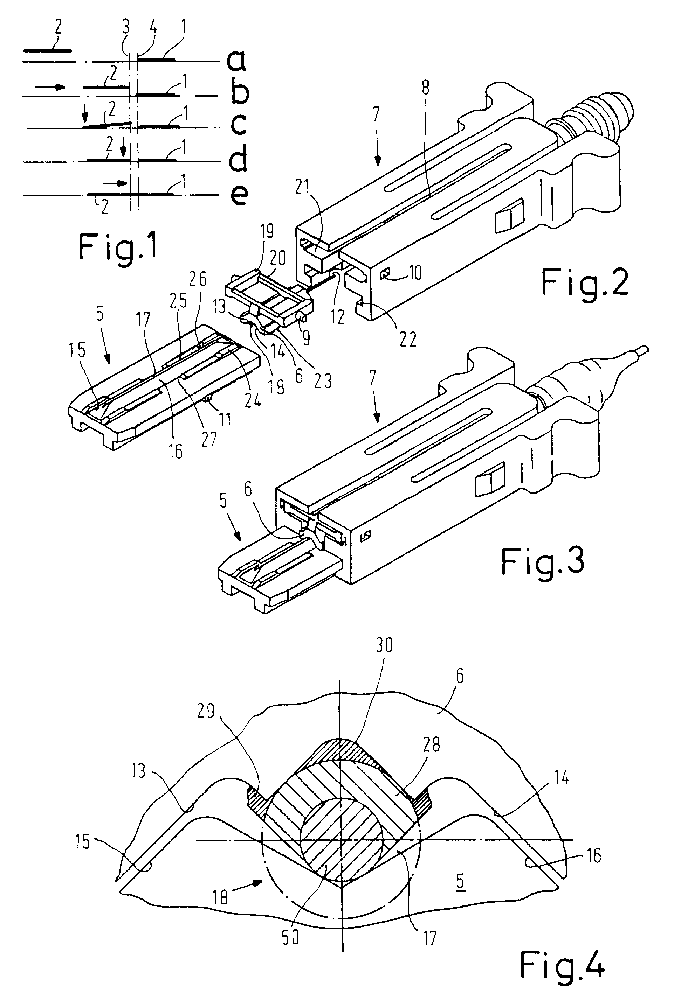

In Fig. 1 sind die charakteristischen Stadien a bis e angedeutet, welche beim Kupplungsvorgang einer erfindungsgemäßen Steckverbindung auftreten. Dabei ist mit 1 jeweils der bereits in einer Führungsrinne eines Richtelements festgelegte LWL bezeichnet. Im Stadium a ist der mit dem LWL 1 zu verbindende LWL 2 in der Stellung kurz vor dem Eindringen in ein Kupplungsteil (beispielsweise ein Verbindungsgehäuse) dargestellt. Der an eine Halterung geklebte LWL 2 wird zunächst entsprechend Stadium b parallel und mit Abstand zur Führungsrinne bis zur Linie 3 geführt, welcher zu der das Ende des LWL 1 bezeichnenden Linie 4 einen geringen Abstand hat. Dann wird zunächst ein hinterer Bereich des LWL 2 gemäß Stadium c in die Führungsrinne gelegt und danach auch sein vorderer Bereich (Stadium d). Darauf wird der LWL 2 an den LWL koaxial zu diesem weiterbewegt (Stadium e). Der Ablauf nach Stadium c ist nur bei besonders hochwertigen Steckverbindungen erforderlich.

In den weiteren Figuren sind besonders vorteilhafte Ausführungsarten einer erfindungsgemäß gestalteten Steckverbindung beschrieben, mit welchen ein Ablauf nach Figur 1 erzielt wird.

Die wesentlichen Bauteile sind das Richtelement 5, die mit Federelementen integrierte Halterung 6 und das Steckergehäuse 7. Diese Bauteile sind in Fig. 3 in zusammengefügtem Zustand dargestellt. Das Steckergehäuse 7 weist einen zum Verbindungsende offenen Schlitz 8 auf, so daß es zum Einrasten der Halterung 6 und des Richtelements 5 aufspreizbar ist. Dabei rasten die Raster 9 der Halterung 6 in Ausnehmungen 10 des Steckergehäuses 7 und Rastnasen 11 des Richtelements 5 in Ausnehmungen 12 des Steckergehäuses 7 ein. Nach dem Einrasten liegt das Richtelement 5 spielfrei im Steckergehäuse 7. Die Halterung 6 ist jedoch in geringem Umfang um die Achse der Rastdornen 9 schwenkbar und weist ein gewisses seitliches Spiel in Richtung dieser Achse auf.

Für die seitlich führende Zuordnung von Halterung 6 und Richtelement 5 sorgen direkt an diesen Bauteilen vorgesehene Schrägflächen 13 und 14 bzw. 15 und 16 (vgl. auch Fig. 4).

Im Scheitelbereich der Schrägflächen 15 und 16 des Richtelements 5 ist eine prismatische Führungsrinne 17 angeordnet, durch welche die zu koppelnden LWL, nämlich der an die Halterung 6 geklebte LWL 18 und ein nicht dargestellter zweiter LWL, koaxial zueinander ausgerichtet werden.

Zunächst wird die Halterung 6 mit den Tragarmen 19, welcher über längliche Federarme 20 einstückig mit der Halterung 6 verbunden sind, in die zugeordneten Aufnahmenuten des Steckergehäuses 7 bis zur Einrastung eingeführt. Danach ragt die zur Stirnfläche des LWL 18 bündige Stirnfläche der Halterung geringfügig aus dem Steckergehäuse 7 hervor. Danach wird das Richtelement 5 in die Aufnahmenuten 22 eingeschoben. Dabei wird die Halterung 6 zunächst entgegen der Rückstellkraft der Federarme 20 gehoben, da Gleitnocken der Halterung 6, welche als Erhebungen ihrer Gleitkufen 23 im vorderen Bereich ausgebildet sind, über die erhöhten Gleitflächenbereiche 24 des Richtelements gedrückt werden. Danach senken sich die Erhebungen der Gleitkufen 23 auf die erniedrigten Abschnitte 25 der Gleitfläche des Richtelements 5 ab und werden darauf bis zum Erreichen des Stadiums b nach Fig. 1 axial weiterbewegt. Schließlich rutscht die hintere Kante der Halterung 6 über die Schrägfläche 26 ebenfalls auf die Abschnitte 25, so daß eine gekippte Lagerung der Halterung 6 gemäß Fig. 1, Stadium c, entsteht. Unmittelbar danach gleiten die Erhebungen der Gleitkufen 23 in den von Gleitflächen freien Bereich 27 des Richtelements 5, wodurch das Stadium d nach Fig. 1 erreicht wird. Abschließend wird das Richtelement 5 bis zur Einrastung in das Steckergehäuse 7 weitergeschoben, so daß sich eine Anordnung nach Fig. 3 ergibt. Die Verklebung des LWL 18 an der Halterung 6 ist in Fig. 4 vergrößert dargestellt. Der LWL 18 ist mit seiner Schutzumhüllung 28 mit einem geeigneten Kleber 29 in eine definiert führende Aufnahmerinne 30 der Halterung 6 geklebt. Nach der Verklebung wird die Schutzumhüllung an der freien Seite des LWL 18 zumindest in den Bereichen durch ein Schabewerkzeug entfernt, wo die aus Quarzglas bestehende Mantelschicht 50 des LWL 18 an den Winkelflächen der prismatischen Führungsrinne 7 anliegen soll.

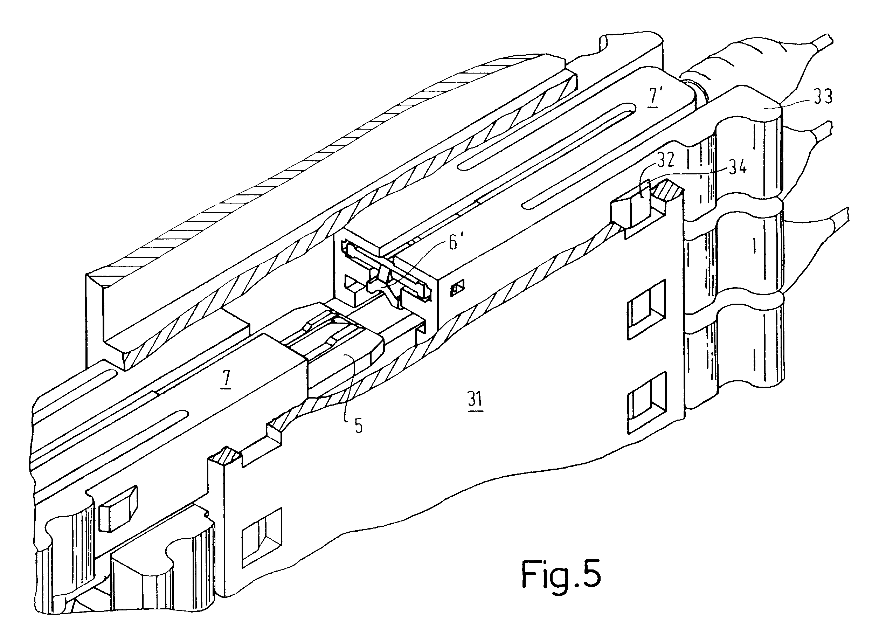

In Fig. 5 ist ein aufgebrochener Teil eines mehrere Steckergehäuse 7 aufnehmenden Mehrfachverbindungsgehäuses 31 erkennbar, in welches die Rastnocken 32 der Steckergehäuse 7, welche an federnd zurückschwenkbaren Griffarmen 33 angeordnet sind, einrasten. Die geneigten Schrägflächen 34 der Rastnocken 32 bewirken dabei eine axiale Federkraft auf die Steckergehäuse 7, wodurch erreicht wird, daß ein Steckergehäuse 7 mit einem korrespondierenden gleichartigen Steckergehäuse 7ʹ mit ihren Verbindungsflächen im beiderseits eingerasteten Zustand stramm aneinander liegen.

In Fig. 5 wird ein gemäß Fig. 3 mit einem Richtelement versehenes Steckergehäuse 7 mit einem korrespondierenden gleichartigen Steckergehäuse 7ʹ gekuppelt, welches jedoch nur mit einer den Gegen-LWL tragenden Halterung 6ʹ versehen ist und selbstverständlich nicht mit einem Richtelement. Der Ablauf des Kupplungsvorganges verläuft analog dem bereits beschriebenen Vorgang der Zusammenfügung der in Fig. 2 dargestellten Bauteile.

Dabei ist wesentlich, daß die Halterungen 6 und 6ʹ im Endzustand in ihre Steckergehäuse 7 und 7ʹ entgegen der Rückstellkraft der Federarme 20 zurückgeschoben sind. Insbesondere bei ballig geschliffenen LWL-Endflächen, die über die Stirnflächen der Halterung 6 herausragen, kann so eine permanente und definierte Federkraft erzeugt werden, die die Stirnflächen der LWL aneinanderdrückt. Diese Federkraft sollte wesentlich größer als die gegenwirkende Reibungskraft sein, welche durch die elastische Andruckkraft entsteht, mit welcher die LWL in die Führungsrinne 17 des Richtelements 5 gedrückt sind.

Sämtliche Bauteile der erfindungsgemäßen Steckverbindung können aus jeweils speziell ausgewählten Kunststoffen hergestellt werden. Verschleißerscheinungen und eine Verschmutzung des Richtelements können nach einer hohen Anzahl von Kupplungsvorgängen auftreten. Es empfiehlt sich in solchen Fällen, das Richtelement auszutauschen.

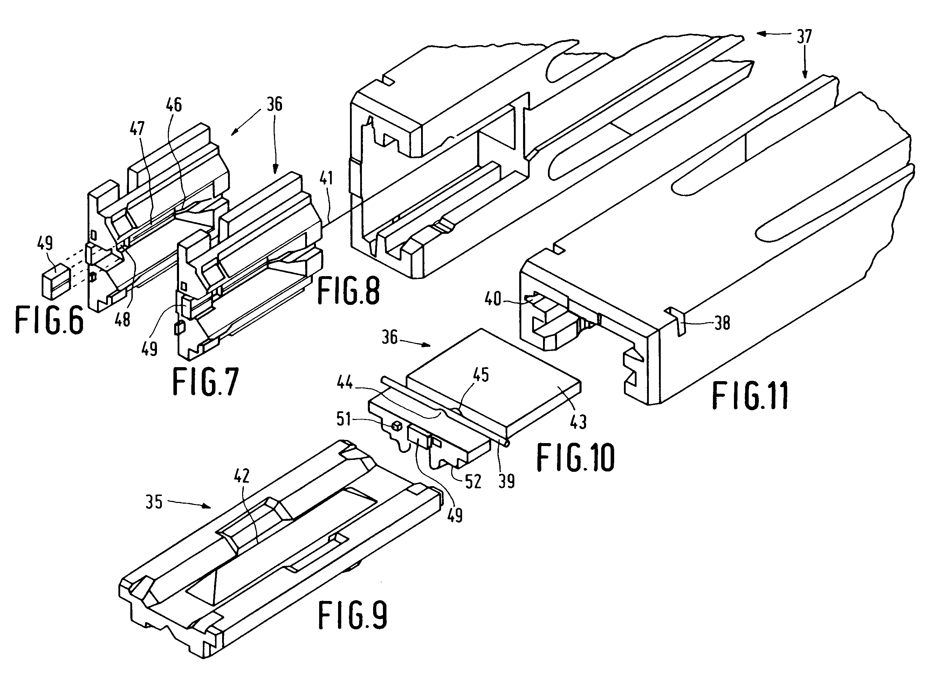

In den Figuren 6 bis 11 sind wesentliche Bestandteile einer gegenüber den Figuren 2 bis 4 abgewandelten Ausführungsform einer erfindungsgemäßen Steckverbindung dargestellt.

Das Richtelement 35 nach Fig. 9 entspricht im Wesentlichen dem Richtelement 5 nach den Figuren 2 und 3, wobei lediglich die konstruktive Gestaltung der Führungsflächen in erkennbar gleichwirkender Weise abgewandelt ist.

Das Steckergehäuse 37 entspricht ebenfalls im Wesentlichen dem Steckergehäuse 7 nach den Figuren 2 und 3. In abgewandelte Ausnehmungen 38 werden die Enden des Federstabs 39 nach Fig. 10 nach dem Einschieben in die Nuten 40 eingerastet.

## Patentansprüche

1. Steckverbindung zweier Lichtwellenleiter mit jeweils einer Halterung (6), in denen die Enden der Lichtwellenleiter festgelegt sind, und die in eine Führungsrinne (17) eines gemeinsamen Richtelements (5) eingedrückt sind, wobei die Halterungen (6) durch mindestens ein in Längsrichtung wirkendes Federelement (20) derart in Richtung zueinander gedrückt sind, daß die Stirnflächen der Enden der Lichtwellenleiter aneinanderliegen,
dadurch gekennzeichnet, daß die Halterungen (6) jeweils in einem zugehörigen Steckergehäuse (7) angeordnet sind, daß Mittel (31) vorhanden sind zur gegenseitigen axial, das ist in Richtung der Lichtwellenleiterachse, beweglichen und radial, das ist quer zur Lichtwellenleiterachse festlegenden Führung der Steckergehäuse, daß mindestens eines der Steckergehäuse (7) eine Aufnahme (22) zum Einschieben eines zugeordneten Bereiches des Richtelements (5) aufweist, daß mindestens ein Steckergehäuse (7) Befestigungsmittel (10) zum Einsetzen der Halterung in das zugehörige Steckergehäuse in der Weise aufweist, daß die Halterung (6) in Richtung der Lichtwellenleiterachse und senkrecht dazu federnd bewegbar ist, daß die Aufnahmen (22) und die Befestigunsmittel (10) so angeordnet sind, daß beim Einschieben des Richtelements (5) ein Gleitflächenbereich (24,25) des Richtelements (5) auf einen entsprechenden Gleitflächenbereich (23) einer Halterung gedrückt wird, daß der Gleitflächenbereich (23) der Halterung in Einschubrichtung gesehen einen ersten vorderen Bereich mit erhöhten Gleitnocken aufweist, daß der Gleitflächenbereich des Richtelements auf der einzuschiebenden Seite einen Bereich mit erhöhten Gleitflächen (24) aufweist, und daß die Längen und die Höhen der erhöhten Gleitflächenbereiche derart gewählt sind, daß beim Einschieben des Richtelements mindestens eines der Lichtwellenleiterenden zunächst mit Freiabstand über die Führungsrinne bis zum Erreichen eines geringen Axialabstands zwischen den Stirnflächen der Lichtwellenleiter geführt wird, (1,2) daß danach der Lichtwellenleiter (2) unter Bewahrung des geringen Axialabstandes in die Führungsrinne drückbar ist, und daß sich danach durch Weiterschiebung des Richtelements sich in der Führungsrinne eine federnde Anlage der Stirnflachen der zu verbindenden Lichtwellenleiter (1,2) ergibt.

2. Anordnung nach Anspruch 1,
dadurch gekennzeichnet, daß die Halterung (6) schwenkbar im zugeordneten Steckergehäuse (7) gelagert ist, daß sie einen zweiten hinteren Bereich mit erhöhten Gleitnocken aufweist, daß das Richtelement im Verbindungsbereich der Lichtwellenleiter einen gleitflächenfreien Bereich aufweist, wobei Längen und Höhe der Gleitflächenbereiche derart gestaltet sind, daß zunächst der hintere Teil des LWL (2) und danach sein vorderer Teil mit einer Kippbewegung in die Führungsrinne bewegt werden.

3. Anordnung nach Anspruch 1 oder 2,
dadurch gekennzeichnet, daß zwischen mit verschiedener Höhe aufeinanderfolgenden Gleitflächen (24,25) eine Übergangsschräge (26) angeordnet ist.

4. Anordnung nach einem der Ansprüche 1 bis 3,
dadurch gekennzeichnet, daß die Halterung (6) für den LWL (18) über Federelemente (20) mit einem zugeordneten Steckergehäuse (7) verbunden ist.

5. Anordnung nach einem der Ansprüche 1 bis 4,
dadurch gekennzeichnet, daß die Bewegung der Halterung (6) durch Anschlagelemente des zugeordneten Gehäuses begrenzt ist.

6. Anordnung nach einem der Ansprüche 1 bis 5,
dadurch gekennzeichnet, daß axiale und senkrecht dazu in Richtung auf die Führungsrinne des Richtelements wirkende Federelemente (20) vorgesehen sind.

7. Anordnung nach einem der Ansprüche 1 bis 6,
dadurch gekennzeichnet, daß die Federelemente (20) längliche Anformungen der Halterungen(6) sind.

8. Anordnung nach einem der Ansprüche 1 bis 6,
dadurch gekennzeichnet, daß ein mit seinem Endbereich in einem Steckergehäuse (37) vorzugsweise verrasteter Federstab (39) mit seinem mittleren Bereich gegen Widerlageransätze (44 und 45) der Halterung (36) für den LWL (41) axial in Richtung auf die Stirnfläche des LWL (41) und senkrecht dazu in Richtung auf die Führungsrinne (42) des Richtelements (35) gedrückt ist.

9. Anordnung nach einem der Ansprüche 1 bis 8,
dadurch gekennzeichnet, daß die Halterung (6) als getrenntes Bauteil in ein Steckergehäuse (7) eingerastet ist.

10. Anordnung nach einem der Ansprüche 1 bis 9,
dadurch gekennzeichnet, daß das Richtelement (5) in das Steckergehäuse (7) eingerastet ist.

11. Anordnung nach einem der Ansprüche 1 bis 10,
dadurch gekennzeichnet, daß das Steckergehäuse (7) in ein Verbindungsgehäuse (31) einsteckbar und in diesem durch Rastung fixierbar ist.

12. Anordnung nach einem der Ansprüche 1 bis 11,
dadurch gekennzeichnet, daß die für die Einrastung des Steckergehäuses (7) in das Verbindungsgehäuse (31) vorgesehene Rastelemente (32) eine Schrägfläche (33) aufweisen, durch welche ein Axialdruck in das Verbindungsgehäuse (31) aufrechterhalten wird.

13. Anordnung nach einem der Ansprüche 1 bis 12,
dadurch gekennzeichnet, daß in das Verbindungsgehäuse (31) von beiden offenen Seiten her gleichartige Steckergehäuse (7,7') einführbar sind, welche mit ihren Stirnflächen gegeneinander schiebbar sind.

14. Anordnung nach einem der Ansprüche 1 bis 13,
dadurch gekennzeichnet, daß die Stirnflächen der LWL und die Stirnflächen der Steckergehäuse (7,7') im Verbindungszustand annähernd in einer gemeinsamen Verbindungsebene liegen.

15. Anordnung nach einem der Ansprüche 1 bis 14,
dadurch gekennzeichnet, daß die Halterung (6) und das Richtelement (5) korrespondierende Einfädelungsführungen (13 bis 16) aufweisen.

16. Anordnung nach einem der Ansprüche 1 bis 15,
dadurch gekennzeichnet, daß die Einfädelungsführungen (13 bis 16) als je zwei im Winkel zueinander angeordnete Flächen ausgebildet sind.

17. Anordnung nach einem der Ansprüche 1 bis 16,
dadurch gekennzeichnet, daß der LWL (18) in eine vorzugsweise V-förmige Rinne (30) der Halterung (6) geklebt ist.

18. Anordnung nach einem der Ansprüche 1 bis 17, dadurch gekennzeichnet, daß der LWL (18) über seine aus
Kunststoff bestehende Umhüllungsschicht (28) (PrimärCoating) in die Rinne (30) der Halterung geklebt ist.

19. Anordnung nach einem der Ansprüche 1 bis 18,
dadurch gekennzeichnet, daß die Berührungsflächen des LWL mit der Führungsrinne (17) des Richtelements (5) von der Umhüllungsschicht freigelegte Umfangsbereiche der Mantelschicht (30) des LWL (18) sind.

20. Anordnung nach einem der Ansprüche 4 bis 19,
dadurch gekennzeichnet, daß die Federelemente Profilteile aus elastomerem Kunststoff sind, die durch Kompression oder Zug und/oder Biegung beansprucht sind.

21. Anordnung nach einem der Ansprüche 1 bis 20,
dadurch gekennzeichnet, daß an der Halterung (36) mindestens ein über die Stirnflächen des LWL (41) hervorragender axialer Vorsprung (51) angeordnet ist, welcher in eine Ausnehmung (52) einer anzukoppelnden korrespondierenden Halterung (36) paßt.

22. Anordnung nach einem der Ansprüche 1 bis 21,
dadurch gekennzeichnet, daß im vorderen Bereich der Halterung (36) ein weichelastisches Einsatzelement (49) eingefügt ist, welches mit einer Rinne den vom Coating befreiten Endbereich des LWL (41) aufnimmt und weich in die Führungsrinne (42) des Richtelements (35) drückt.

23. Anordnung nach einem der Ansprüche 1 bis 22,
dadurch gekennzeichnet, daß in der Halterung (36) mit axialem Freiabstand (48) zum weichelastischen Einsatzelement (49) ein flacher Rinnenabschnitt (47) zur Führung des LWL (41) angeordnet ist.

24. Anordnung nach einem der Ansprüche 1 bis 23,
dadurch gekennzeichnet, daß der hintere Bereich der Halterung (36) eine den eingelegten LWL (41) überragende Erweiterung (46) aufweist, in welche ein den LWL (41) satt überdeckender Kleber eingefüllt ist.

## Claims

1. A plug connector for two optical waveguides each comprising a holder (6) for securing the ends of the optical waveguides which are pressed in a guide groove (17) of a common guide element (5), at least one resilient element (20), acting in the longitudinal direction, pressing said holders (6) towards each other in such a manner that the end faces of the optical waveguides are in contact with each other, characterized in that the holders (6) are individually arranged in an associated plug housing (7), in that means (31) are available which enable the plug housings to be guided in such a manner that they can be axially moved, i.e. in the direction of the axis of the optical waveguide, id radially fixed, i.e. transverse to the axis of the optical waveguide, relative to each other, in that at least one of the plug housings (7) comprises a receiving means (22) into which an associated portion of the guide element (5) is inserted, in that at least on plug housing (7) comprises a fixing means (10) for inserting the holder into the associated plug housing in such a miner that the holder (6) is resiliently movable in the direction of the axis of the optical waveguide and perpendicularly thereto, in that the receiving means (22) and the fixing means (10) are arranged so that during inserting the guide element (5), a sliding surface area (24, 25) of said guide element (5) is pressed onto a corresponding sliding surface area (23) of a holder, in that the sliding surface area (23) of the holder, viewed in the direction of insertion, comprises a first front area having raised sliding cams, in that the sliding surface area of the guide element comprises an area having raised sliding cams (24) which is situated on the insertion side, and in that the length and height dimensions of the raised sliding surface areas are selected in such a manner that, during inserting the guide element, at least one of the ends of the optical waveguides is led, initially with clearance, over the guide groove until a small axial distance between the end faces of the optical waveguides (1, 2) is attained, in that the optical waveguide (2) can subsequently be pressed into the guide groove while maintaining the small axial distance, and in that subsequently the guide element is fed forward, resulting in a resilient engagement of the end faces of the optical waveguides (1, 2) to be interconnected in the guide groove.

2. An arrangement as claimed in Claim 1, characterized in that the holder (6) is pivotably supported in the associated plug housing (7), in that said holder comprises a second, rear area having raised sliding cams, in that the guide element comprises an area which does not have a sliding surface in the connection area of the optical waveguides, the length and height dimensions of the sliding surface areas being chosen to be such that first the rear portion of the OWG (2) and then the front portions are moved in the guide groove with a tilting movement.

3. An arrangement as claimed in Claim 1 to 2, characterized in that a transition slope (26) is provided between sliding surfaces (24, 25) succeeding each other at different heights.

4. An arrangement as claimed in any of the Claims 1 to 3, characterized in that the holder (6) for the OWG (18) is connected to a plug housing (7) via resilient elements (20).

5. An arrangement as claimed in any of the Claims 1 to 4, characterized in that the movement of the holder (6) is limited by abutments of the associated housing.

6. An arrangement as claimed in any of the Claims 1 to 5, characterized in that axial resilient elements (20) and resilient elements acting at right angles thereto in the direction of the guide groove of the guide element are provided.

7. An arrangement as claimed in any of the Claims 1 to 6, characterized in that the resilient elements (20) are elongate extensions of the holders (6).

8. An arrangement as claimed in any of the Claims 1 to 6, characterized in that a resilient rod (39) which is preferably locked with its rear area in a plug housing (37), is forced axially with its central area against abutments (44 and 45) of the holder (36) for the OWG (41) in the direction of the end face of the OWG (41) and at right angles thereto in the direction of the guide groove (42) of the guide element (35).

9. An arrangement as claimed in any of the Claims 1 to 8, characterized in that the holder (6) is locked in a plug housing (7) as a separate component.

10. An arrangement as claimed in any of the Claims 1 to 9, characterized in that the guide element (5) is locked in the plug housing (7).

11. An arrangement as claimed in any of the Claims 1 to 10, characterized in that the plug housing (7) can be plugged into a plug connector housing (31) and can be fixed therein by locking.

12. An arrangement as claimed in any of the Claims 1 to 11, characterized in that the locking elements (32) provided for locking the plug housing (7) in the plug connector housing (31) comprise a sloping surface (33) by which an axial pressure is maintained in the plug connector housing (31).

13. An arrangement as claimed in any of the Claims 1 to 12, characterized in that similar plug housings (7,7') can be introduced from both open sides into the plug connector housing (31) and can be moved towards each other so as to bring their end faces into contact.

14. An arrangement as claimed in any of the Claims 1 to 13, characterized in that the end faces of the OWGs and the end faces of the plug housings (7, 7') in the connected condition are situated substantially in a common connection plane.

15. An arrangement as claimed in any of the Claims 1 to 14, characterized in that the holder (6) and the guide element (5) comprise corresponding threading guides (13 to 16).

16. An arrangement as claimed in any of the Claims 1 to 15, characterized in that the threading guides (13 to 16) are each formed as two faces arranged at an angle with respect to each other.

17. An arrangement as claimed in any of the Claims 1 to 16, characterized in that the OWG (18) is bonded in a preferably V-shaped groove (30) of the holder (6).

18. An arrangement as claimed in any of the Claims 1 to 17, characterized in that the OWG (18) is bonded in the groove (30) of the holder via its primary coating (28) consisting of a synthetic resin.

19. An arrangement as claimed in any of the Claims 1 to 18, characterized in that the contact surfaces of the OWG with the guide groove (17) of the guide element (5) are circumferential areas of the sheath (30) of the OWG (18) from which the primary coating has been removed.

20. An arrangement as claimed in any of the Claims 4 to 19, characterized in that the resilient elements are profiled parts of an elastomeric synthetic resin which are under stress by compression or tension and/or bending.

21. An arrangement as claimed in any of the Claims 1 to 20, characterized in that at least one axial projection (51) projecting beyond the end face of the OWG (41) is provided on the holder (36) and fits in a recess (52) of a corresponding holder (36) to be coupled.

22. An arrangement as claimed in any of the Claims 1 to 21, characterized in that a flexible insert element (49) is inserted in the front area of the holder (36) and receives in a groove the end area of the OWG (41) from which the coating has been removed and gently presses said end area in the guide groove (42) of the guide element (35).

23. An arrangement as claimed in any of the Claims 1 to 22, characterized in that a flat groove section (47) for guiding the OWG (41) has been provided in the holder (36) at an axial free distance (48) from the flexible insert element (49).

24. An arrangement as claimed in any of the Claims 1 to 23, characterized in that the rear area of the holder (36) comprises a widening (46) which extends over the inserted OWG (41) and in which an adhesive amply covering the OWG (41) has been provided.

## Revendications

1. Connexion par fiches de deux guides de lumière comportant chaque fois un support (6) dans lequel sont fixées les extrémités des guides de lumière et qui sont serrées dans une gorge de guidage (17) d'un élément de guidage commun (5), les supports (6) étant serrés l'un contre l'autre par au moins un élément élastique (20) serrant dans le sens longitudinal de manière que les faces terminales des guides de lumière se situent l'une contre l'autre, caractérisée en ce que les supports (6) sont toujours disposés dans un boîtier de connecteur associé (7), en ce que l'on a prévu des moyens (31) pour le guidage mutuel axialement amovible du boîtier de connecteur, c'est-à-dire dans le sens de l'axe des guides de lumière, ainsi que pour le guidage radialement défini du boîtier de connecteur, c'est-à-dire transversalement à l'axe des guides de lumière, en ce qu'au moins l'un des boîtiers de connecteur (7) présente un logement (22) pour l'introduction d'une zone associée de l'élément de guidage (5), en ce qu'au moins un boîtier de connecteur (7) présente des moyens de fixation (10) pour une telle mise en place du support dans le boîtier de connecteur correspondant que le support soit flexiblement amovible dans le sens de l'axe du guide de lumière et perpendiculairement audit axe, en ce que les logements (22) et les moyens de fixation (10) sont disposés de manière qu'à l'introduction de l'élément de guidage (5) une surface de glissement (24, 25) de l'élément de guidage (5) est serrée sur une surface de glissement correspondante (23) d'un support de manière que la surface de glissement (23) du support, vue dans le sens d'introduction, présente une première zone avant comportant une came de glissement rehaussée, que la surface de glissement de l'élément de guidage présente, du côté d'introduction, une zone comportant une surface de glissement rehaussée (24), et en ce que les longueurs et les hauteurs des surfaces de glissement rehaussées sont choisies de manière que lors de l'introduction de l'élément de guidage au moins l'une des extrémités du guide de lumière peut d'abord être guidée librement entre les faces terminales des guides de lumière à travers la gorge de guidage jusqu'à l'atteinte d'une faible distance axiale, qu'ensuite le guide de lumière (2) peut être serré dans la gorge de guidage tout en maintenant la faible distance axiale et que finalement on obtient un position souple des faces terminales des guides de lumière à connecter (1, 2) en avançant l'élément de guidage dans la gorge de guidage.

2. Agencement selon la revendication 1, caractérisé en ce que le support (6) est logé amoviblement dans le boîtier de connecteur associé (7), qu'il présente une deuxième zone arrière comportant des cames de glissement rehaussées, que dans la zone de jonction des guides de lumière l'élément de guidage présente une zone exempte de surfaces de glissement, les longueurs et hauteurs des surfaces de glissement étant conçues de manière que d'abord la partie arrière du guide de lumière (2) est déplacé en culbutant dans l'élément de guidage et qu'ensuite sa partie avant est déplacée en culbutant dans l'élément de guidage.

3. Agencement selon la revendication 1 ou 2, caractérisé en ce qu'une surface inclinée de transition (26) est disposée entre deux surfaces de glissement (24, 25) se succédant et présentant une hauteur différente.

4. Agencement selon l'une des revendications 1 à 3, caractérisé en ce que le support (6) conçu pour le guide de lumière (18) est relié à un boîtier de connecteur associé (7) par l'intermédiaire d'éléments flexibles (20).

5. Agencement selon l'une des revendications 1 à 4, caractérisé en ce que le mouvement du support (6) est limité par des éléments d'arrêt du boîtier associé.

6. Agencement selon l'une des revendications 1 à 5, caractérisé en ce que l'on a prévu des éléments flexibles axiaux (20) serrant perpendiculairement et dans le sens de la gorge de guidage de l'élément de guidage.

7. Agencement selon l'une des revendications 1 à 6, caractérisé en ce que les éléments flexibles (20) constituent des extensions longitudinales des supports (6)

8. Agencement selon l'une des revendications 1 à 6, caractérisé en ce qu'une tige flexible (39) avantageusement verrouillée avec sa partie terminale dans un boîtier de connecteur (37) est serrée avec sa partie centrale contre des éléments de butée (44 et 45) du support (36) pour le guide de lumière (41) axialement dans le sens de la surface terminale du guide de lumière (41) et perpendiculairement à ladite surface dans le sens de la gorge de guidage (42) de l'élément de guidage (42).

9. Agencement selon l'une des revendications 1 à 8, caractérisé en ce que le support (6) est verrouillé dans un boîtier de connecteur (7) comme composant séparé.

10. Agencement selon l'une des revendications 1 à 9, caractérisé en ce que l'élément de guidage (5) est verrouillé dans le boîtier de connecteur (7).

11. Agencement selon l'une des revendications 1 à 10, caractérisé en ce que le boîtier de connecteur (7) peut être introduit dans un boîtier à jonctions (31) pour y être fixé par verrouillage.

12. Agencement selon l'une des revendications 1 à 11, caractérisé en ce que les éléments de verrouillage (32) prévus en vue du verrouillage du boîtier de connecteur (7) dans le boîtier à jonctions (31) présentent une surface inclinée (33) maintenant une pression axiale dans le boîtier à jonctions (31).

13. Agencement selon l'une des revendications 1 à 12, caractérisé en ce que des boîtiers de connecteur similaires (7, 7') leurs faces terminales pouvant être rapprochées l'une contre l'autre peuvent être introduits des deux côtés dans le boîtier à jonctions (31).

14. Agencement selon l'une des revendications 1 à 13, caractérisé en ce que dans l'état connecté les faces terminales des guides de lumière et les faces terminales des boîtiers de connecteur (7, 7') se situent à peu près dans un même plan de connexion.

15. Agencement selon l'une des revendications 1 à 14, caractérisé en ce que le support (6) et l'élément de guidage présentent des guidages d'enfilement correspondants (13 à 16).

16. Agencement selon l'une des revendications 1 à 15, caractérisé en ce que les guidages d'enfilement (13 à 16) sont chacun conçus de manière à constituer deux surfaces disposées sous un certain angle les unes par rapport aux autres.

17. Agencement selon l'une des revendications 1 à 16, caractérisé en ce que le guide de lumière (18) est collé avantageusement dans une gorge en V (30) du support (6).

18. Agencement selon l'une des revendications 1 à 17, caractérisé en ce que le guide de lumière (18) est collé sur toute la longueur de sa couche de protection (revêtement primaire) (28) en résine synthétique dans la gorge en V (30) du support.

19. Agencement selon l'une des revendications 1 à 18, caractérisé en ce que les surfaces de contact du guide de lumière conjointement avec la gorge de guidage (17) de l'élément de guidage (5) sont constituées de zones circonférentielles du guide de lumière (18) dont on a enlevé le revêtement de protection (30).

20. Agencement selon l'une des revendications 4 à 19, caractérisé en ce que les éléments élastiques sont des éléments profilés en résine synthétique d'élastomère chargés par compression, par traction et/ou par fléchissement.

21. Agencement selon l'une des revendications 1 à 20, caractérisé en ce que le support (36) comporte au moins une partie en saillie axiale (51) dépassant la surface terminale du guide de lumière (41) qui pénètre dans une rainure (52) pratiquée dans un support correspondant à accoupler (36).

22. Agencement selon l'une des revendications 1 à 21 caractérisé en ce que dans la zone avant du support (36) est disposé un élément d'insertion élastique (49) recevant dans une échancrure la partie terminale du guide de lumière (41) dénudée de son revêtement pour la serrer doucement dans la gorge de guidage (42) de l'élément de guidage (35).

23. Agencement selon l'une des revendications 1 à 22, caractérisé en ce qu'il est prévu dans le support (36) en vue du guidage du guide de lumière (41) une partie de gorge plane (47) présentant une distance axiale libre (48) vis-à-vis de l'élément d'insertion élastique (49).

24. Agencement selon l'une des revendications 1 à 23, caractérisé en ce que la zone arrière du support (36) présente un élargissement (46) dépassant le guide de lumière (41) y mis en place et rempli d'une colle couvrant complètement le guide de lumière (41).
